(19) Europäisches Patentamt / European Patent Office / Office européen des brevets

(11) **EP 3 988 194 A1**

(12) **EUROPEAN PATENT APPLICATION**
published in accordance with Art. 153(4) EPC

(43) Date of publication:
**27.04.2022 Bulletin 2022/17**

(21) Application number: **20826850.8**

(22) Date of filing: **20.05.2020**

(51) International Patent Classification (IPC):
**B01D 17/04** (2006.01)

(52) Cooperative Patent Classification (CPC):
**B01D 17/04**

(86) International application number:
**PCT/JP2020/019940**

(87) International publication number:
**WO 2020/255610 (24.12.2020 Gazette 2020/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.06.2019 JP 2019115271**

(71) Applicants:
• **Asada Mesh Co.,Ltd.**
  **Matsubara-shi, Osaka, 580-0015 (JP)**
• **Kagoshima University**
  **Kagoshima-shi, Kagoshima 890-0065 (JP)**

(72) Inventors:
• **MIZUGUCHI Yoshifumi**
  **Matsubara-shi, Osaka 580-0015 (JP)**
• **SHIMOKOMAKI Shinichi**
  **Matsubara-shi, Osaka 580-0015 (JP)**
• **NII Susumu**
  **Kagoshima-shi, Kagoshima 890-0065 (JP)**
• **MIZUTA Kei**
  **Kagoshima-shi, Kagoshima 890-0065 (JP)**

(74) Representative: **Horn Kleimann Waitzhofer
Patentanwälte PartG mbB
Ganghoferstrasse 29a
80339 München (DE)**

(54) **COALESCER AND OIL-WATER SEPARATION DEVICE**

(57)　A coalescer reduces pressure loss and clogging using an oil film to facilitate coalescence of oil droplets without being captured and accumulating. The coalescer (11) is installable on a flow path for a target liquid to be treated containing oil droplets. The coalescer (11) includes sheets of metal mesh (12) with, for example, a plain weave, twill weave, or thick weave stacked on one another to form mesh layers (16) and interlayer portions (15) between the layers (16). The metal mesh (12) has a surface extending along a flow of the target liquid. Oil droplets (31) come into contact with either or both of warp wires (13) and weft wires (14) to form an oil film (32) that moves downstream with the target liquid flow. The oil film (32) grows into larger droplet particles (34) at downstream ends of the mesh layers. The larger droplet particles (34) leave the coalescer (11) with the flow of the target liquid.

FIG. 4

**Description**

BACKGROUND OF INVENTION

Field of the Invention

The present invention relates to a coalescer for an oil-water separation device for, for example, wastewater treatment.

Background Art

A coalescer includes a packed bed formed using, for example, resin fibers. The coalescer is installed on a flow path for a treatment target liquid to capture, in the liquid, oil droplets to accumulate into larger droplets. Such larger oil droplets can float easily, leaving the coalescer. This allows separation of oil from water. The mechanism has long been known, as described in, for example, Patent Literature 1, and remains mainstream.

However, oil droplets captured and accumulating inside the packed bed cause more pressure loss in the flow of the target liquid. The target liquid thus uses more driving energy to flow.

At low flow rates, oil droplets to be captured and accumulate inside the packed bed may flow through voids without hitting the packed material. Such oil droplets may flow out of the system without forming larger droplets, thus disabling the coalescer from working effectively. To achieve accurate separation using known coalescers, the flow rate is to be increased to cause fewer oil droplets to flow without hitting the packed material and instead cause oil droplets to hit the packed material under inertia. This causes more pressure loss in the flow and increases the driving energy to be used.

The coalescer described in Patent Literature 1 may also be clogged with oil droplets accumulating (gathering), thus involving relatively frequent regular replacement.

CITATION LIST

PATENT LITERATURE

Patent Literature 1: Japanese Unexamined Patent Application Publication No. 54-100571

SUMMARY OF INVENTION

TECHNICAL PROBLEM

One or more aspects of the present invention are mainly directed to achieving high separation performance and reducing pressure loss and clogging using an oil film to facilitate the coalescence of oil droplets.

SOLUTION TO PROBLEM

In response to the above issue, a coalescer is installable on a flow path for a target liquid to be treated. The coalescer includes an assembly including a sheet of metal mesh. The metal mesh has a surface extending along a flow of the target liquid.

The coalescer with this structure causes oil droplets in the flowing target liquid to form into an oil film on surfaces of the wires of the metal mesh. This facilitates the coalescence of oil droplets on the surfaces of the metal mesh and between the layers of the metal mesh. The oil film of coalescent oil droplets moves downstream along the layers of the metal mesh extending along the flow of the target liquid, forming larger oil droplets at the downstream ends of the mesh layers. The larger oil droplets that can no longer stay on the mesh leave the downstream end of the assembly along the flow.

ADVANTAGEOUS EFFECTS

The coalescer according to one or more aspects of the present invention causes oil droplets in a treatment target liquid to form into an oil film along metal mesh layers extending along the flow of the target liquid to quickly coalesce into larger droplets without accumulating. This causes less pressure loss and decreases the driving energy to be used for the flow. The oil droplets move as the oil film without accumulating and cause less blockage, thus reducing clogging and largely reducing burdensome maintenance.

The coalescer according to one or more aspects of the present invention causes all oil droplets to hit the oil film to achieve high separation performance at low flow rates unlike known coalescers that may cause some oil droplets at low flow rates to flow without hitting the packed material and without forming larger droplets.

BRIEF DESCRIPTION OF THE DRAWINGS

FIG. 1 is a schematic diagram of an oil-water separation device.
FIG. 2 is a perspective view of a coalescer.
FIG. 3A is a plan view of metal mesh included in the coalescer, and FIG. 3B is a side view of the coalescer.
FIG. 4 is a schematic diagram of the coalescer in operation.
FIG. 5 is a perspective view of a coalescer according to another embodiment.
FIG. 6 is a schematic diagram of an oil-water separation device according to another embodiment.
FIG. 7 is a graph showing the results of an oil-water separation experiment using the coalescer according to an embodiment of the present invention.
FIG. 8 is a graph showing the absorbance of a feed liquid in the oil-water separation experiment using the coalescer according to the embodiment of the present invention.
FIG. 9 is a graph comparing the degree of separation between the coalescer according to the embodiment of the present invention and coalescers according to comparative examples.

DETAILED DESCRIPTION

An embodiment of the present invention will now be described with reference to the drawings.

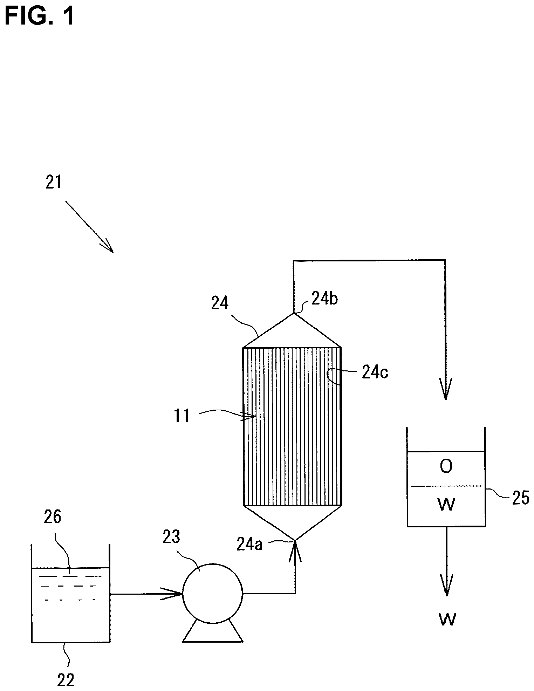

FIG. 1 schematically shows an oil-water separation device 21 including a coalescer 11. The oil-water separation device 21 is used for wastewater treatment in, for example, an oil plant or a food factory. The oil-water separation device 21 includes a feed tank 22, a pump 23, a treatment tank 24, and a collection tank 25.

An overview of the oil-water separation device 21 will be described, and then the coalescer 11 will be described.

The feed tank 22 stores a target liquid 26 to be treated. The feed tank 22 stores the target liquid 26 from which unintended fine particles have been removed. The oil-water separation device 21 may further include a filter (not shown) for removing fine particles upstream or downstream from the feed tank 22.

The pump 23 pumps the target liquid 26 downstream from the feed tank 22. The pump 23 has a capacity selected in accordance with the scale of the oil-water separation device 21.

The treatment tank 24 treats the target liquid 26 for oil-water separation. The treatment tank 24 has an inlet 24a at the lower end and an outlet 24b at the upper end. The treatment tank 24 defines a flow path 24c for a flow in one direction, or an upward direction. The flow path 24c includes the coalescer 11. The coalescer 11 allows the target liquid 26 pumped by the pump 23 to flow in one direction. The coalescer 11 thus causes fine oil droplets contained in the target liquid 26 to coalesce and form larger oil-droplet particles for easy separation from water.

The collection tank 25 stores the target liquid 26 passing through the treatment tank 24. The larger oil-droplet particles from the treatment tank 24 float on water. Thus, oil (O) and water (W) are separate from each other in the collection tank 25. The water (W) stored below the oil (O) is discharged downward.

The coalescer 11 will now be described in detail.

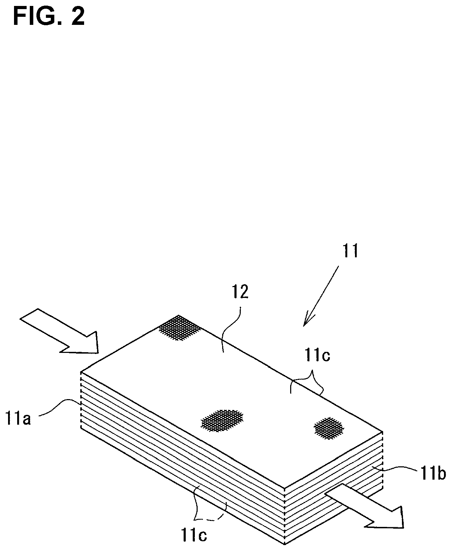

As shown in FIG. 2, the coalescer 11 includes an assembly including sheets of metal mesh 12. The coalescer 11 is installed on the flow path 24c in the treatment tank 24 to have its metal mesh 12 having a surface extending along the flow of the target liquid 26, or in other words, along the flow path 24c.

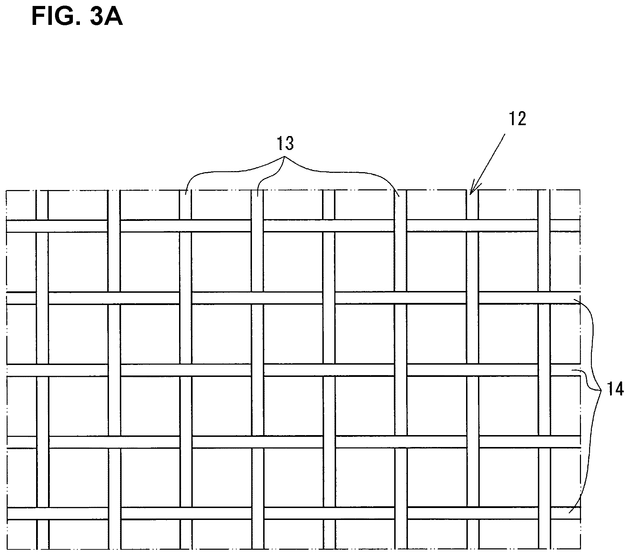

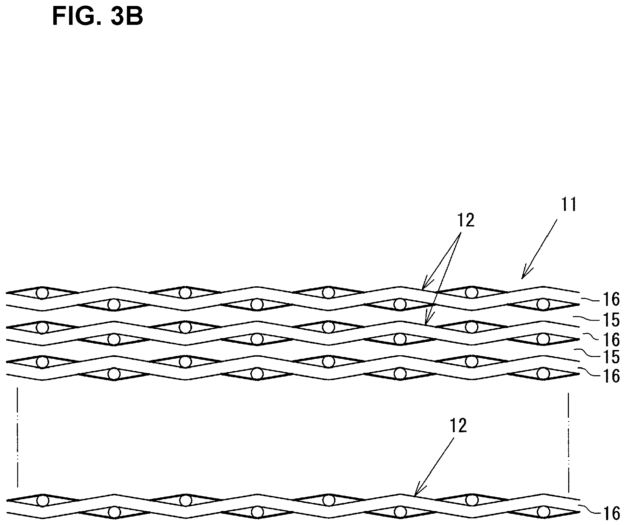

More specifically, as in the plan view of FIG. 3A, the metal mesh 12 includes warp wires 13 and weft wires 14 crossing the warp wires 13. The metal mesh 12 has a plain weave structure in which the warp wires 13 are orthogonal to the weft wires 14. As in the side view of FIG. 3B, the coalescer 11 including the metal mesh 12 includes alternate mesh layers 16 and interlayer portions 15 defined by the facing surfaces of the metal mesh 12.

As in the perspective view of FIG. 2, the coalescer 11 includes an assembly including sheets of metal mesh 12. The coalescer 11 has a profile corresponding to the shape of the flow path 24c in the treatment tank 24 and may be shaped as appropriate for the cross-sectional shape of the flow path 24c. The coalescer 11 illustrated in FIG. 2 is rectangular and includes multiple sheets of metal mesh 12 stacked in one direction. In FIG. 2, the outlined arrows indicate the direction in which the target liquid 26 flows. In some embodiments, the coalescer 11 may include an assembly including one or more Z-folded sheets of metal mesh 12.

The coalescer 11 has an inlet surface 11a and an outlet surface 11b opposite to each other and each having a shape corresponding to the cross-sectional shape of the flow path 24c. The inlet surface 11a faces the inlet 24a of the treatment tank 24. The outlet surface 11b faces the outlet 24b of the treatment tank 24. The warp wires 13 or the weft wires 14 extending along the flow of the target liquid 26 each have an end exposed at the inlet surface 11a and the outlet surface 11b. In this embodiment, the warp wires 13 extend along the flow of the target liquid 26. In addition to the inlet surface 11a and the outlet surface 11b, the coalescer 11 has side surfaces 11c in contact with the inner surface of the flow path 24c.

In the coalescer 11 with this structure, the alternate mesh layers 16 and interlayer portions 15 extend along the same plane and are parallel to each other.

The type of metal mesh 12 included in the coalescer 11 is selected in accordance with the type of target liquid 26, and may be a fine stainless steel mesh or a tungsten mesh. The metal mesh 12 may typically be a fine stainless steel mesh with a plain weave, a twill weave, or a thick weave (3D-mesh, registered trademark) of metal fibers having a wire diameter of about 0.01 to 0.2 mm with an aperture of about 0.02 to 0.3 mm. Any of such different types of mesh may be combined as appropriate.

In the oil-water separation device 21 including the coalescer 11 with the above structure, the pump 23 is driven to pump the target liquid 26 from the feed tank 22 to the treatment tank 24, which then causes oil droplets in the target liquid 26 to form larger oil-droplet particles in the manner described below.

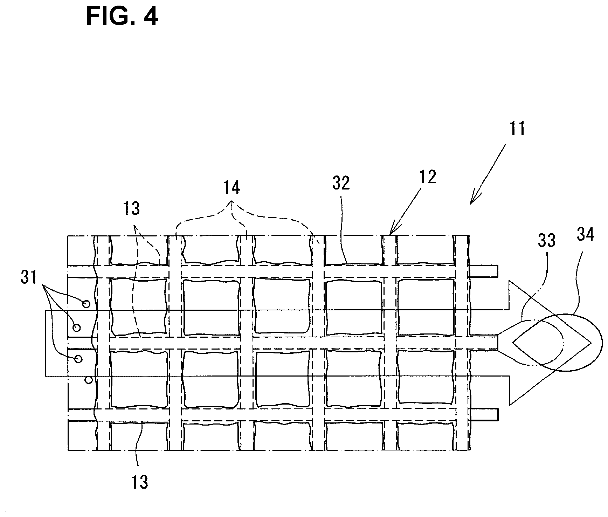

As schematically shown in FIG. 4, fine oil droplets 31 in the target liquid 26 come into contact with an oil film forming on the surfaces of the warp wires 13 and the weft wires 14 of the metal mesh 12 while flowing from the inlet surface 11a to the outlet surface 11b of the coalescer 11.

As shown in FIG. 4, an oil film 32 moves along the warp wires 13 extending mainly in the flow direction or along the weft wires 14 or along both wires when the target liquid 26 flows as indicated by the outlined arrow. Further oil droplets 31 then come into contact with and coalesce into the oil film 32 on the warp wires 13 and the weft wires 14. The weft wires 14 cause the oil droplets 31 that are not in contact with the warp wires 13 to coalesce into the oil film 32.

While the oil droplets 31 coalesce one after another into the oil film 32, the oil film 32 moves downstream along the mesh layers 16 and the interlayer portions 15. The oil film 32 forms into larger droplets at the downstream ends of the mesh layers 16. The larger droplets further grow into larger droplets 33 at the ends of either or both of the warp wires 13 and weft wires 14 at the outlet surface 11b until such droplets 33 can no longer stay against the flow of the target liquid 26 and leave the coalescer 11 as larger droplet particles 34.

The larger droplet particles 34 flowing out of the treatment tank 24 easily float on water in the collection tank 25 to form a layer of oil (O) above a layer of water (W) in the collection tank 25.

The oil droplets 31 in the target liquid 26 thus quickly coalesce into the oil film 32 on the surface of the metal mesh 12 and flow downstream as the oil film 32 along the mesh layers 16 and the interlayer portions 15 without accumulating or gathering while passing through the coalescer 11. The oil droplets 31 are not captured or do not accumulate or gather into a lump. The oil film 32 can freely flow downstream through the interlayer portions 15 with less pressure loss. The pump 23 for pumping the target liquid 26 can thus have a smaller capacity and a smaller size.

The oil droplets 31 quickly coalescing into larger droplets allow oil-water separation for the target liquid 26 in a shorter time. The flow path 24c can be shortened to downsize the coalescer 11.

The oil droplets 31 move as the oil film 32 without accumulating as described above, thus allowing a sufficient clearance and space in the coalescer 11 and causing less blockage. This reduces clogging and thus largely reduces burdensome maintenance.

The larger droplet particles 34 resulting from the growing oil droplets 31 form on the outlet surface 11b of the coalescer 11. This allows easy maintenance with any larger droplet particles 34 remaining on the outlet surface 11b, unlike the larger droplet particles 34 forming in the internal clearance.

The coalescer 11 includes an assembly including sheets of metal mesh 12 with the interlayer portions 15 easily defined by the sheets.

The coalescer 11 is formed by stacking sheets of metal mesh 12 and is thus easy to manufacture.

Another embodiment will now be described. The same components herein are given the same reference numerals and will not be described in detail.

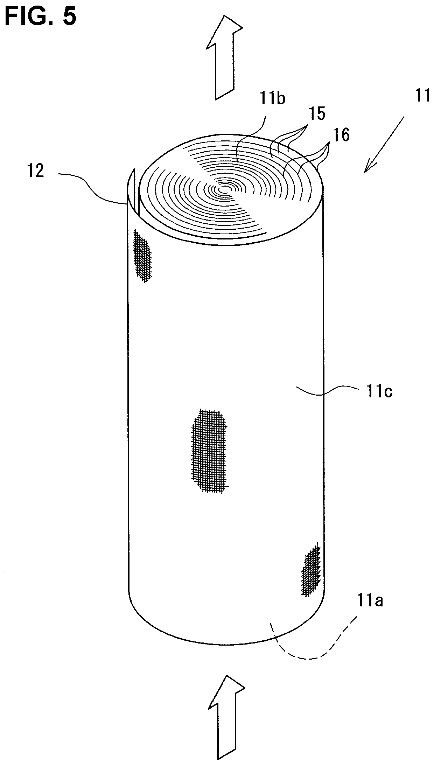

FIG. 5 is a perspective view of a coalescer 11 according to another embodiment. The coalescer 11 includes a single sheet of metal mesh 12 rolled into an assembly. More specifically, the single sheet of metal mesh 12 is rolled from one end into the assembly with its axis along warp wires. This structure defines interlayer portions 15 between mesh layers 16 forming a spiral as viewed from an end face to be an inlet surface 11a or an outlet surface 11b.

The coalescer 11 with this structure has the effects similar to those of the coalescer 11 described above. In particular, the coalescer 11 is formed by rolling a single sheet of metal mesh 12 and thus is easy to manufacture. The coalescer 11 with this structure may include a stack of multiple sheets of metal mesh 12 rolled into an assembly.

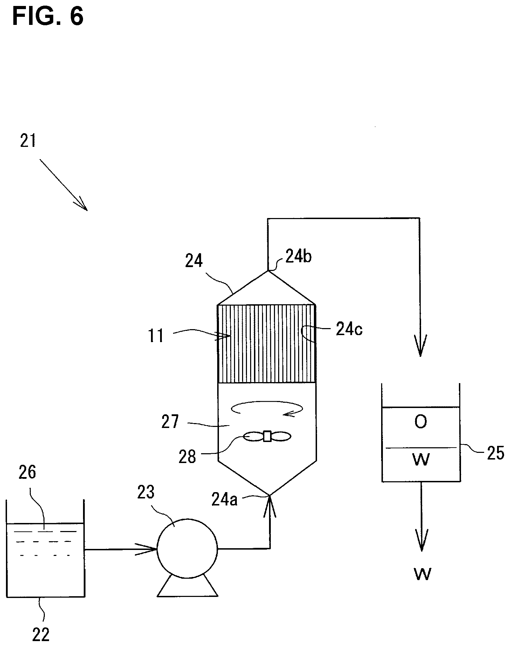

FIG. 6 is a schematic diagram of an oil-water separation device 21 according to another embodiment. Unlike the oil-water separation device 21 shown in FIG. 1, this oil-water separation device 21 includes a treatment tank 24 including a mixer 27 as a micronizer for micronizing oil droplets in a target liquid 26 to be treated. The mixer 27 stirs the target liquid 26 to micronize oil droplets in the target liquid 26 to be, for example, some hundreds of micrometers.

The mixer 27 includes appropriate stirrer blades 28 and is located upstream from the coalescer 11. The mixer 27 may be located outside the treatment tank 24.

The oil-water separation device 21 with this structure stirs the target liquid 26 to break and micronize oil droplets immediately before the oil droplets coalesce into larger droplets in the coalescer 11. This allows quicker coalescence through the formation of an oil film in the coalescer 11.

In other words, the structure further facilitates the coalescence of oil droplets, forming larger droplet particles with a shorter flow path 24c. The coalescer 11 can thus be downsized further, in addition to having the same effects as described above.

To verify the separation performance for oil droplets, the experiment below was conducted.

In the experiment, a sample containing oil droplets was pumped by a tube pump, passed through the coalescer, and then collected. The absorbance of the sample before being pumped by the tube pump, or in other words, a feed liquid, was measured. The absorbance of the collected sample, or in other words, a collected liquid, was also measured. The measurement results were used to calculate the degree of separation measured with visible light.

The degree of separation measured with visible light was calculated using Formula 1 below.

Formula 1

$$\text{degree of separation measured with visible light} =$$

$$\frac{(\text{absorbance of feed liquid}) - (\text{absorbance of collected liquid})}{(\text{absorbance of feed liquid})}$$

The absorbance of the feed liquid and the absorbance of the collected liquid were used to calculate an exponential approximation curve, which was then used to examine the degree of separation measured with visible light (degree of separation).

A pressure transducer was used to measure the pressure (inlet voltage) of the liquid before entering the coalescer and the pressure (outlet voltage) of the liquid after exiting the coalescer. The measurement results were used to calculate the inlet pressure and the outlet pressure. The outlet pressure was then subtracted from the inlet pressure to calculate the pressure loss.

The sample was prepared by adding 3 milliliters of tetradecane to 1.5 liters of deionized water and emulsified using an ultrasonic irradiator with a horn.

The sample was pumped by the pump continuously and measured in the manner described above in multiple stages over time from immediately after the emulsification. The multiple stages are the 11 stages shown in Table 1. The tube pump has a capacity of 80 mL/min and 173 kPa.

The coalescer includes 158 sheets of plain weave stainless steel mesh (380 mesh, 20-mm square) stacked flat to be substantially rectangular. The coalescer was packed in a rectangular flow path with a length of 20 mm, a width of 20 mm, and a height of 3 mm.

In experiments of comparative examples, coalescers described below were each packed in the same flow path. The coalescer in comparative example 1 was packed with fibers of Teflon (registered trademark) or polytetrafluoroethylene (PTFE) with a wire diameter of 10 to 50 pm at a packing factor of 0.4. The coalescer in comparative example 2 was packed with fibers of polypropylene (PP) with an average wire diameter of 16 $\mu$m at a packing factor of 0.4. The coalescer in comparative example 3 was packed with polyurethane (PU) foam.

Table 1 shows the results of the experiment using the coalescer according to the embodiment of the present invention.

In Table 1, Run indicates the 11 stages described above, $C_{in}$ indicates the absorbance of the feed liquid, $C_{in.fitting}$ indicates the exponent, $C_{out}$ indicates the absorbance of the collected liquid, $V_{p1}$ indicates the inlet voltage, $V_{p2}$ indicates the outlet voltage, Pin indicates the inlet pressure, $P_{out}$ indicates the outlet pressure, and $\Delta P$ indicates the pressure loss.

Table 1

| Run | Time | | | C_in [-] | C_in.fitting [-] | C_out [-] | V_p1 [V] | V_p2 [V] | P_in [kPa] | P_out [kPa] | ΔP [kPa] | Degree of separation [-] | Calculation from approximation curve | |
|---|---|---|---|---|---|---|---|---|---|---|---|---|---|---|
| | | | | | | | | | | | | | Values on curve | Ratio of absolute deviation |
| 1 | 9:05:33 | - | 9:09:34 | 1.014 | 1.001 | 0.047 | 3.330 | 3.009 | 16.727 | 0.451 | 16.3 | 0.953 | 0.9645 | 0.012 |
| 2 | 9:16:31 | - | 9:22:48 | | 0.986 | 0.039 | 3.277 | 3.011 | 14.021 | 0.549 | 13.5 | 0.960 | 0.9702 | 0.010 |
| 3 | 9:25:51 | - | 9:29:07 | 0.996 | 0.973 | 0.020 | 3.198 | 3.011 | 10.005 | 0.580 | 9.4 | 0.979 | 0.9785 | 0001 |
| 4 | 9:34:39 | - | 9:38:11 | 0.939 | 0.961 | 0.027 | 3.272 | 3.013 | 13.781 | 0.681 | 13.1 | 0.972 | 0.9709 | 0.001 |
| 5 | 9:41:55 | - | 9:44:34 | | 0.952 | 0.029 | 3.368 | 3.016 | 18.641 | 0.834 | 17.8 | 0.970 | 0.9614 | 0.008 |
| 6 | 9:49:44 | - | 9:53:19 | 0.926 | 0.941 | 0.034 | 3.460 | 3.016 | 23.296 | 0.802 | 22.5 | 0.964 | 0.9519 | 0.013 |
| 7 | 9:56:33 | - | 9:59:38 | | 0.932 | 0.049 | 3.605 | 3.007 | 30.622 | 0374 | 30.2 | 0.947 | 0.9365 | 0.012 |
| 8 | 10:03:57 | - | 10:06:23 | 0.904 | 0.923 | 0.082 | 3.745 | 3.013 | 37.734 | 0.651 | 37.1 | 0.911 | 0.9231 | 0.013 |
| 9 | 10:08:56 | - | 10:15:40 | | 0.916 | 0.030 | 3.320 | 3.013 | 16.205 | 0.651 | 15.6 | 0.967 | 0.9659 | 0.001 |
| 10 | 10:16:56 | - | 10:24:42 | | 0.906 | 0.017 | 3.170 | 3.013 | 8.615 | 0.666 | 7.9 | 0.981 | 0.9815 | 0.000 |
| 11 | 10:35:09 | - | 10:38:51 | 0.905 | 0.884 | 0.012 | 3.121 | 3.015 | 6.134 | 0.756 | 5.4 | 0.986 | 0.9869 | 0.000 |
| | | | | | | | | | | | | | | 0.65% |

EP 3 988 194 A1

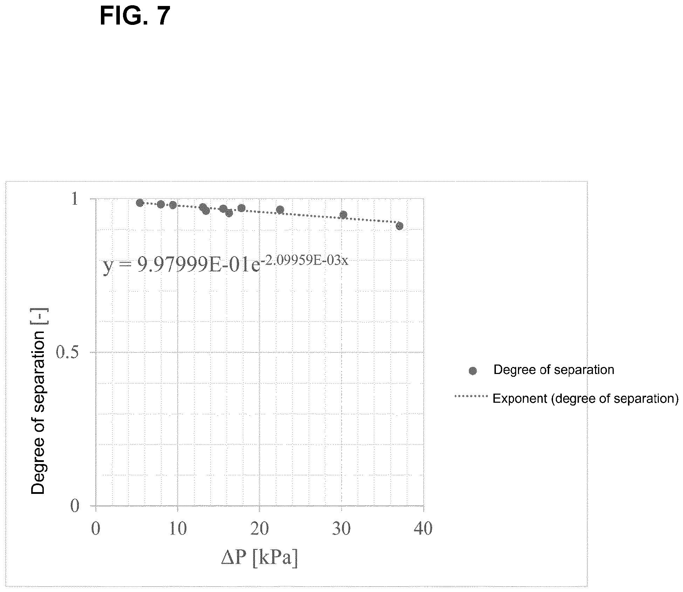

FIG. 7 is a graph with the horizontal axis indicating the calculated pressure loss and the vertical axis indicating the degree of separation. The dashed line in FIG. 7 indicates an exponential approximation curve.

For all of Run 1 to Run 11, the degree of separation was higher than 0.9, which was very high, with any pressure loss.

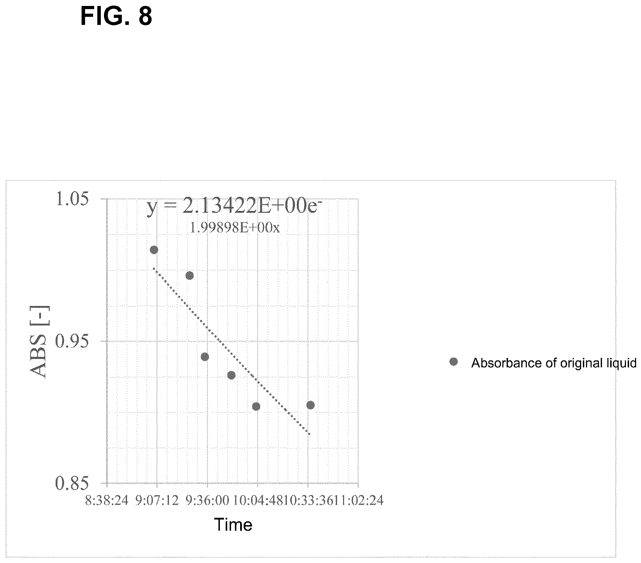

The exponential approximation curve for the absorbance of the feed liquid indicated by the dashed line in FIG. 8 was used to calculate values on this curve. As shown in Table 1, for Run 1 to Run 11, the respective ratios between the degree of separation and the degree of separation on the curve were 0.953:0.9645, 0.960:0.9702, 0.979:0.9785, 0.972:0.9709, 0.970:0.9614, 0.964:0.9519, 0.947:0.9365, 0.911:0.9231, 0.964:0.9659, 0.981:0.9815, and 0.986:0.9869. All the ratios of absolute values were not higher than 0.013. In other words, the degree of separation did not vary largely for the pressure loss. The absolute standard deviation was calculated to be 0.65%. The device thus has high performance for a wide operating range.

The device in the embodiment of the present invention achieves high separation performance at low pressure losses. The device thus allows oil droplets to form larger droplets effectively at low flow rates, unlike the known technique that may cause oil droplets to flow without hitting the packed material at low flow rates and fail to form larger droplets and cause a low degree of separation.

The coalescers in the comparative examples yielded results largely different from the results for the coalescer according to the embodiment of the present invention.

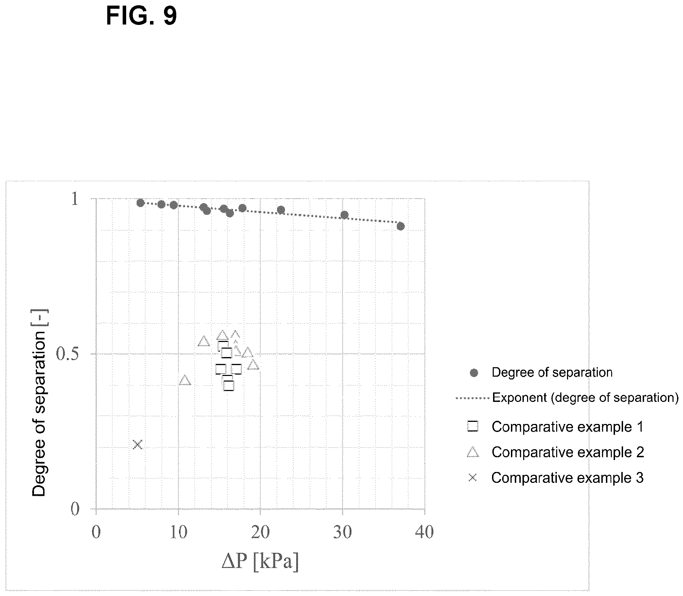

FIG. 9 shows the results of the comparative examples over the graph of FIG. 7. In each of comparative examples 1 and 2, the degree of separation is around 0.5. This is much lower than 0.9 or higher achieved by the coalescer according to the embodiment of the present invention. This reveals that oil droplets in the comparative examples flow without hitting the packed material and are discharged outside the system without forming larger droplets at low flow rates, indicating the issue raised by the known technique.

In each of comparative examples 1 and 2, the pressure loss is between 10 kPa and 20 kPa, revealing the separation performance achieved for a specific operating range.

In comparative example 3, the degree of separation is about 0.2, which is much lower than in comparative examples 1 and 2.

The above experiments reveal that the coalescer according to the embodiment of the present invention allows a high degree of oil-water separation for a wide operating range.

The structure described above is an embodiment of the present invention. The present invention is not limited to the structure but may be modified.

For example, the assembly of the metal mesh 12 may include multiple sheets of metal mesh 12 stacked in multiple directions. In some embodiments, the assembly may include a bundle of multiple rolls of sheets of metal mesh 12.

The metal mesh 12 may undergo any treatment that increases lipophilicity, such as silica coating.

REFERENCE SIGNS LIST

> 11 coalescer
> 12 metal mesh
> 13 warp wire
> 14 weft wire
> 21 oil-water separation device
> 24 treatment tank
> 24c flow path
> 25 collection tank
> 26 target liquid
> 27 mixer

**Claims**

1. A coalescer installable on a flow path for a target liquid to be treated, the coalescer comprising:
an assembly including a sheet of metal mesh, the metal mesh having a surface extending along a flow of the target liquid.

2. The coalescer according to claim 1, wherein
the metal mesh includes warp wires and weft wires crossing the warp wires.

3. The coalescer according to claim 1 or claim 2, wherein
the assembly includes sheets of metal mesh stacked on one another.

4. The coalescer according to claim 1 or claim 2, wherein
the assembly includes a roll of the metal mesh.

5. An oil-water separation device, comprising:
the coalescer according to any one of claims 1 to 4.

6. The oil-water separation device according to claim 5, further comprising:
a micronizer upstream from the coalescer to micronize oil droplets in the target liquid.

# FIG. 1

# FIG. 2

FIG. 3A

# FIG. 3B

FIG. 4

# FIG. 5

## FIG. 6

# FIG. 7

$$y = 9.97999\text{E-}01\text{e}^{-2.09959\text{E-}03x}$$

- Degree of separation
- ········· Exponent (degree of separation)

# FIG. 8

FIG. 9

## INTERNATIONAL SEARCH REPORT

International application No.

PCT/JP2020/019940

### A. CLASSIFICATION OF SUBJECT MATTER
Int. Cl. B01D17/04(2006.01)i
FI: B01D17/04 501G, B01D17/04 504B

According to International Patent Classification (IPC) or to both national classification and IPC

### B. FIELDS SEARCHED

Minimum documentation searched (classification system followed by classification symbols)
Int. Cl. B01D17/02-17/04, C02F1/40

Documentation searched other than minimum documentation to the extent that such documents are included in the fields searched
Published examined utility model applications of Japan     1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)
JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| X | JP 58-8518 A (NITTAN CO., LTD.) 18 January 1983, page 2, fig. 2, 3 | 1-3, 5-6 |
| Y | | 4-6 |
| X | 菊池克城ほか，金属メッシュ型コアレッサーを用いる油水分離，化学工学会第50回秋季大会(2018)研究発表講演要旨集，2018，PA371，"1. Introduction", "2. Experiment", "3. Results and Observations" (KIKUCHI, Katsuki et al. Application of metal mesh coalescer for oil and water separation. Abstracts of the SCEJ 50th Autumn Meeting.) | 1-2, 4-6 |
| Y | | 3, 5-6 |

☒ Further documents are listed in the continuation of Box C.     ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22.07.2020 | 04.08.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2020/019940 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | Microfilm of the specification and drawings annexed to the request of Japanese Utility Model Application No. 030850/1974 (Laid-open No. 119638/1975) (MITSUI PETROCHEMICAL INDUSTRIES, LTD.) 30 September 1975, page 2, line 18 to page 4, line 15, fig. 1-4 | 3-6 |
| Y | JP 52-65969 A (SAKAI CHEMICAL INDUSTRY CO., LTD.) 31 May 1977, claims, fig. 1, 9 | 3-6 |
| A | US 2012/0152122 A1 (CHEVRON U.S.A. INC.) 21 June 2012, entire text, all drawings | 1-6 |
| A | JP 2018-12080 A (JFE ENGINEERING CORP.) 25 January 2018, example 1 | 6 |

Form PCT/ISA/210 (continuation of second sheet) (January 2015)

**INTERNATIONAL SEARCH REPORT**

Information on patent family members

| International application No. |
|---|
| PCT/JP2020/019940 |

| Patent Documents referred to in the Report | Publication Date | Patent Family | Publication Date |
|---|---|---|---|
| JP 58-8518 A | 18.01.1983 | (Family: none) | |
| JP 50-119638 U1 | 30.09.1975 | (Family: none) | |
| JP 52-65969 A | 31.05.1977 | (Family: none) | |
| US 2012/0152122 A1 | 21.06.2012 | WO 2012/087382 A1 EP 2655561 A1 | |
| JP 2018-12080 A | 25.01.2018 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 54100571 A